Europäisches Patentamt

(19) European Patent Office

Office européen des brevets

(11) Numéro de publication: **0 017 716**
**B1**

(12) FASCICULE DE BREVET EUROPEEN

(45) Date de publication du fascicule du brevet: **06.07.83**

(51) Int. Cl.³: **H 04 L 25/03**

(21) Numéro de dépôt: **80100623.0**

(22) Date de dépôt: **07.02.80**

(54) **Procédé pour initialiser un égaliseur adaptatif à partir d'un signal de données inconnu dans un système de transmission utilisant une modulation à double bande latérale-porteuse en quadrature.**

(30) Priorité: **17.04.79 FR 7910422**

(43) Date de publication de la demande:
**29.10.80 Bulletin 80/22**

(45) Mention de la délivrance du brevet:
**06.07.83 Bulletin 83/27**

(84) Etats contractants désignés:
**DE FR GB**

(56) Documents cités:
**US - A - 3 978 407**

**IBM TECHNICAL DISCLOSURE BULLETIN, vol. 20, no. 10, mars 1978 New York US DES BLACHE et al.: "Fast Adaptive Equalizer for Maximum Likelihood Sequence Estimation", pages 3953—3956**

(73) Titulaire: **International Business Machines Corporation**
**Armonk, N.Y. 10504 (US)**

(72) Inventeur: **Godard, Dominique, Noel**
**L'Ormeau de Barnarac Chemin des Chênes**
**F-06650 Le Rouret (FR)**

(74) Mandataire: **de Pena, Alain**
**COMPAGNIE IBM FRANCE Département de Propriété Industrielle**
**F-06610 La Gaude (FR)**

# 0017716

Procede pour initialiser un egaliseur adaptatif a partir d'un signal de donnees inconnu dans un systeme de transmission utilisant une modulation a double bande laterale-porteuses en quadrature

## Domaine technique

La présente invention concerne les égaliseurs automatiques adaptatifs utilisés dans les systèmes de transmission de données utilisant une modulation à double bande latérale-porteuses en quadrature (DSB—QC). Le terme modulation DSB—QC est utilisé ici au sens large de façon à inclure tous les systèmes dans lesquels le signal transmis peut être représenté par la superposition de deux porteuses en quadrature modulées en amplitude. Le terme modulation DSB—QC inclut ainsi notamment la modulation par sauts de phase, la modulation par sauts de phase et d'amplitude combinés, et la modulation d'amplitude en quadrature. La présente invention concerne plus particulièrement un procédé et un dispositif pour initialiser un égaliseur adaptatif à partir d'un signal de données inconnu reçu par le récepteur, et est particulièrement utile dans les systèmes de transmission de données arrangés en réseau multipoint.

## Etat de la technique antérieure

Dans les systèmes de transmission de données utilisant une modulation DSB—QC, la séquence de bits à transmettre est tout d'abord divisée en groupes de Q bits et on fait correspondre à chacun de ces groupes un de $2^Q$ nombres complexes, ou symboles complexes. On a l'habitude d'illustrer l'ensemble de ces $2^Q$ symboles sur un plan complexe en y portant les points ayant ces symboles pour coordonnées. L'ensemble de ces points est désigné généralement par le terme constellation du signal. Ces symboles sont ensuite transmis un par un à des instants régulièrement espacés de T secondes, appelés instants de signalisation. Chaque symbole est transmis en faisant correspondre respectivement à ses parties réelle et imaginaire une valeur d'amplitude de deux porteuses en quadrature. Ces deux porteuses sont ensuite combinées et appliquées à l'entrée du canal de transmission.

Le rôle du canal de transmission est de délivrer à sa sortie connectée à un récepteur de données un signal relativement semblable à celui qui a été appliqué à son entrée. Pour des raisons essentiellement économiques on utilise le plus souvent des lignes téléphoniques comme canal de transmission. Or, si les lignes téléphoniques sont bien adaptées pour transmettre correctement la parole, elles ne le sont pas pour transmettre des données numériques à des vitesses supérieures ou égales à 4800 bits par seconde avec une très faible probabilité d'erreur. En effet, ces lignes introduisent des perturbations qui affectent la qualité des signaux pendant leur transmission, et qui rendent difficile une détection correcte des données transmises. Ces perturbations comprennent principalement des distorsions d'amplitude et de phase qui provoquent une interaction entre les signaux successivement transmis, connue sous le nom d'interférence intersymbole. Dans les récepteurs des systèmes de transmission de données à grande vitesse on utilise généralement un égaliseur automatique adaptatif pour minimiser les effets de l'interférence intersymbole avant de détecter les données.

Le type d'égaliseur adaptatif le plus utilisé dans les systèmes de transmission de données utilisant une modulation DSB—QC est l'égaliseur transversal complexe dont on trouvera un exemple de réalisation dans le brevet français No. 7326404 publié sous le No. 2 237 379. Dans l'égaliseur décrit dans ce brevet, chacune des composantes en phase et en quadrature du signal reçu est appliquée à l'entrée d'une paire de filtres transversaux et les sorties de ces filtres sont combinées pour générer les composantes en phase et en quadrature du signal égalisé. Les coefficients de ces filtres, qui constituent les coefficients de l'égaliseur, sont ajustés automatiquement de façon à satisfaire un critère de performance donné. Avant de transmettre des données, il est nécessaire que les valeurs des coefficients de l'égaliseur soient aussi proches que possible de valeurs optimales. Pour cela, on prévoit avant la transmission des données une période d'initialisation au cours de laquelle une séquence d'initialisation connue est transmise et analysée par le récepteur qui en dérive un ajustement initial des coefficients de l'égaliseur à des valeurs aussi proches que possible des valeurs optimales. Les coefficients sont ensuite ajustés continuellement pendant la transmission des données.

Dans les systèmes de transmission de données arrangés en réseau multipoint, plusieurs équipements terminaux de données échangent des données à travers une ligne de transmission commune. Chaque équipement terminal est relié à la ligne de transmission commune à travers un modem qui comprend un émetteur et un récepteur de données. Tous les équipements terminaux n'ont pas le même degré d'intelligence et en général l'un d'eux, qui est souvent un calculateur, contrôle l'ensemble du réseau et la transmission de données se fait entre ce calculateur et les autres équipements terminaux de données. On a l'habitude de désigner par modem maître le modem associé au calculateur et par modems tributaires les autres modems. En général, une fois par jour avant toute transmission de données une procédure d'initialisation du réseau prend place, au cours de laquelle l'émetteur du modem maître envoie des signaux de synchronisation sur la ligne de transmission commune pour conditionner convenablement les récepteurs des modems tributaires pour qu'ils soient prêts à recevoir ultérieurement les données transmises. Ces signaux de synchronisation comprennent notamment une séquence d'initialisation connue qui permet d'initialiser les égaliseurs des récepteurs tributaires. Cependant, il peut se produire des cas où il est nécessaire d'initialiser l'égaliseur du récepteur d'un modem tributaire après que la procédure d'initialisation du réseau ait été terminée. C'est notamment le

2

cas où un modem tributaire n'était pas sous tension alors de la procédure d'initialisation du réseau et n'a donc pas reçu la séquence d'initialisation, et le cas où un récepteur tributaire bien que conditionné lors de la procédure d'initialisation du réseau perd ensuite l'égalisation à la suite de dégradations des caractéristiques de la ligne de transmission.

Plusieurs méthodes pour initialiser dans ces cas là l'égaliseur d'un récepteur sont proposées par l'art antérieur.

Dans une première méthode de l'art antérieur, l'émetteur du modem maître transmet périodiquement une séquence d'initialisation pour permettre l'initialisation des égaliseurs de tous les modems tributaires. Dans une seconde méthode de l'art antérieur, le modem tributaire qui a perdu l'égalisation alerte le modem maître et, en réponse, l'émetteur du modem maître transmet une séquence d'initialisation qui permet d'initialiser l'égaliseur du modem tributaire.

Dans ces deux méthodes de l'art antérieur, le récepteur du modem tributaire connaît la séquence d'initialisation transmise et peut dériver assez facilement un ajustement initial de l'égaliseur à partir de la séquence d'initialisation reçue. Cependant, dans ces deux méthodes l'ensemble du réseau est perturbé car acune transmission de données ne peut avoir lieu pendant la transmission de la séquence d'initialisation.

Dans une troisième méthode de l'art antérieur, dans chaque modem tributaire il est prévu des moyens pour emmagasiner plusieurs jeux de coefficients d'égaliseur qui sont essayés successivement lorsqu' une perte d'égalisation se produit. On ne peut bien sûr prévoir un grand nombre de jeux différents de coefficients et il arrive qu'on ne peut récupérer d'égalisation lorsque la ligne de transmission introduit des distorsions importantes.

L'article "Fast Adaptive Equalizer For Maximum Likelihood Sequence Estimation" de A. Desblache et J. Tarrieur paru dans IBM Technical Disclosure Bulletin, mars 1978, pages 3953—3956, décrit un procédé pour ajuster un égaliseur en utilisant un décodeur à maximum de vraisemblance. Selon ce procédé, dans une première étape, les coefficients de l'égaliseur sont ajustés selon la méthode conventionnelle du gradient à partir d'une réponse impulsionnelle désirée de référence fixe, et dans une seconde étape, la réponse impulsionnelle désirée est optimalisée. Ce procédé présente l'inconvénient de nécessiter un décodeur à maximum de vraisemblance qui est un dispositif complexe, et utilise aussi bien pour l'ajustement des coefficients de l'égaliseur que pour l'optimalisation de la réponse impulsionnelle désirée, un signal d'erreur dérivé de la valeur des symboles de données détectés. L'article ne décrit pas quel serait l'efficacité d'un tel procédé pour réaliser une égalisation à partir d'une condition initiale d'égalisation éloignée de la condition idéale.

La demande de brevet français No. 78 18478 déposée par la demanderesse le 13 juin 1978 décrit un procédé pour initialiser l'égaliseur d'un récepteur dans un système de transmission utilisant une modulation d'amplitude en quadrature, à partir d'un signal de données inconnu, et qui permet ainsi notamment l'initialisation de l'égaliseur d'un récepteur dans les cas décrits plus haut. Selon la procédé décrit dans cette demande de brevet, dans un récepteur de données dans lequel en fonctionnement normal les données sont détectées par rapport à une première constellation qui est celle utilisée par l'émetteur du système de transmission, on initialise l'égaliseur en détectant les données par rapport à une seconde constellation ayant un nombre de points inférieur à celui de ladite première constellation, et en ajustant les coefficients de l'égaliseur à partir d'un signal d'erreur obtenu à partir de cette opération de détection par rapport à la seconde constellation. Ce procédé donne de très bons résultats mais pour son utilisation, il est nécessaire que le récepteur connaisse la constellation utilisée par l'émetteur. Or dans les systèmes de transmission de données, la cadence de transmission des données peut varier au cours de la journée à cause, par exemple, des perturbations introduites par le canal de transmission, et dans les systèmes utilisant une modulation DSB—QC, on fait en général varier la cadence de transmission des données non pas en faisant varier la cadence de signalisation mais en faisant varier la constellation utilisée. Dans ce cas le modem tributaire qui a perdu l'égalisation et qui doit s'initialiser sur les signaux présents sur la ligne de transmission commune ne connaît pas exactement quelle est la constellation utilisée par le modem maître qui est en train d'émettre.

Exposé de l'invention

L'objet principal de l'invention est de fournir un procédé pour initialiser l'égaliseur d'un récepteur DSB—QC, qui ne nécessitent ni la transmission d'une séquence d'initialisation connue ni la connaissance de la constellation utilisée par l'émetteur pour transmettre les données.

D'une manière générale, l'invention propose un procédé pour initialiser l'égaliseur d'un récepteur dans un système de transmission utilisant une modulation DSB—QC, à partir d'un signal de données inconnu, et qui permettent l'initialisation de l'égaliseur d'un récepteur sans nécessiter la connaissance de la constellation utilisée par l'émetteur. Selon le procédé de l'invention, l'égaliseur est initialisé en ajustant ses coefficients de façon à minimiser la quantité $D^{(p)}$ qu'on désigne par le terme "dispersion d'ordre p" et qui est définie par la relation

**0017716**

$$D^{(p)}=E(\,|\,z_n\,|\,^p-R)^2$$

où

p est un nombre entier positif,

E indique l'espérance mathématique,

$z_n$ est le signal égalisé à l'instant de signalisation nT, et

R est une constante réelle positive.

Pour minimiser la dispersion $D^{(p)}$, on engend un signal d'erreur à partir du signal égalisé, le signal d'erreur $e_n$ à l'instant de signalisation nT étant défini par

$$e_n=z_n\,|\,z_n\,|\,^{p-2}(\,|\,z_n\,|\,^p-R)$$

et on ajuste les coefficients de l'égaliseur de façon à tendre à annuler le produit de corrélation

$$Ey_n^*\,e_n$$

où

$y_n$ est le vecteur des signaux stockés dans l'égaliseur, et

* indique la quantité complexe conjuguée.

Selon un mode de réalisation préféré de l'invention, on ajuste les coefficients de l'égaliseur de façon à minimiser la dispersion d'ordre 1, $D^{(1)}$

$$D^{(1)}=E(\,|\,z_n\,|\,-R)^2$$

le signal d'erreur $e_n$ est alors défini par la relation:

$$e_n=z_n-R\,\exp j\,\psi_n$$

où

$\psi_n$ est la phase du signal égalisé $z_n$.

D'autres objets, caractéristiques et avantages de la présente invention ressortiront mieux de l'exposé qui suit, fait en référence aux dessins annexés à ce texte, qui représentent un mode de réalisation préféré de celle-ci.

Brève Description des Figures

La figure 1 représente le bloc diagramme d'un récepteur DSB—QC incorporant l'invention.

La figure 2 représente un premier mode de réalisation du générateur d'erreur 30 de la figure 1.

La figure 3 constituée par les figures 3A et 3B représente un second mode de réalisation du générateur d'erreur 30 de la figure 1.

La figure 4 représente un diagramme qui est utilisé pour expliquer le principe de fonctionnement du générateur d'erreur de la figure 3.

La figure 5 représente schématiquement l'égaliseur complexe adaptatif 14 de la figure 1.

La figure 6 représente schématiquement le dispositif d'ajustement des coefficients 130 de la figure 5.

Modes de réalisation de l'invention

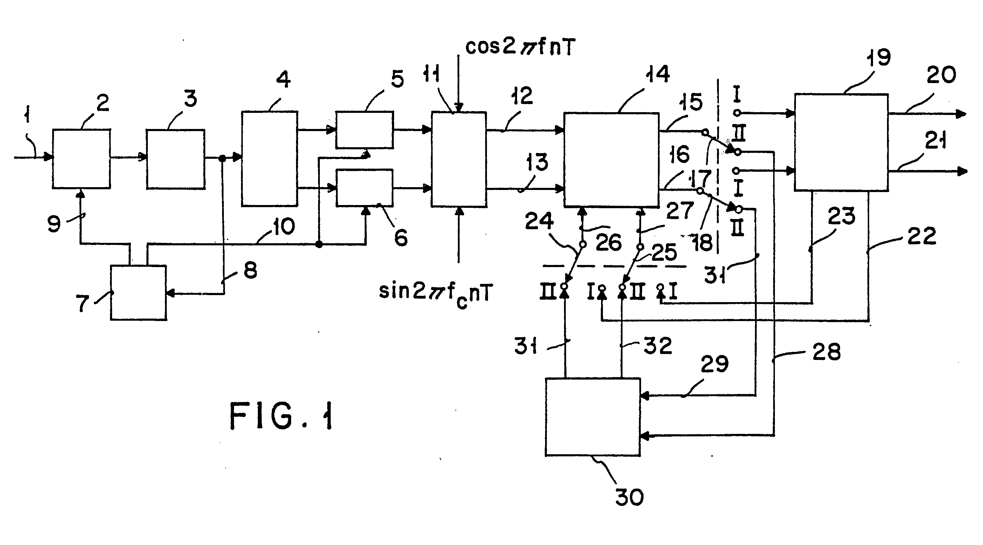

Pour situer l'invention dans son contexte, on a représenté sur la figure 1 le bloc diagramme typique d'un récepteur DSB—QC 9600 bits par seconde conforme à l'avis V29 du CCITT et incorporant l'invention. Le signal reçu du canal de transmission, dont l'énergie a été normalisée par un circuit de contrôle autumatique de gain (non représenté) et qui a été filtré par un filtre passe bande (non représenté) qui rejette le bruit hors bande, est appliqué par une ligne 1 à un dispositif d'échantillonnage 2 dans lequel il est échantillonné à la cadence $1/\tau$. La cadence $1/\tau$ est choisie égale à un multiple m/T de la cadence de signalisation 1/T de façon à ce que l'on dispose à la sortie du dispositif 2 d'un nombre d'échantillons suffisant pour bien définir le signal reçu. La valeur de l'amplitude de ces échantillons est convertie en numérique dans un convertisseur analogique-numérique 3 et appliquée à l'entrée d'un transformateur de Hilbert numérique 4.

Un transformateur de Hilbert est un dispositif qui a une entrée et deux sorties et qui fournit respectivement à ses deux sorties les composantes en phase et en quadrature du signal appliqué à son entrée. On en trouvera un exemple de réalisation numérique dans l'article "Theory and Implementation of the Discrete Hilbert Transform", paru dans "Digital Signal Processing", L. R. Robiner et C. M. Rader, 1972 IEEE Press.

Les composantes en phase et en quadrature du signal reçu, fournies par le transformateur de Hilbert 4 sont respectivement ré-échantillonnées à la cadence de signalisation 1/T par deux dispositif d'échantillonnage 5 et 6. Un dispositif de récupération de chronologie 7 a son entrée reliée par une

4

**0017716**

ligne 8 à la sortie du convertisseur analogique-numérique 3 et commande le dispositif d'échantillonnage 2 par une ligne 9, les dispositifs d'échantillonnage 5 et 6 par une ligne 10 et tous les autres composants du récepteur par des lignes non représentées. On trouvera un exemple de réalisation d'un tel dispositif de récupération de chronologie dans le brevet français No. 75 14020 déposé par la demanderesse le 25 avril 1975 et publié sous le No. 2 309 089. Les composantes en phase et en quadrature du signal reçu, disponibles respectivement à la sortie des dispositifs d'échantillonnage 5 et 6, sont appliquées aux entrées d'un démodulateur complexe 11. Le démodulateur 11 reçoit d'une source locale non représentée une porteuse en phase de la forme $\cos 2\pi f_c nT$, et une porteuse en quadrature de la forme $\sin 2\pi f_c nT$; $f_c$ étant la fréquence de la porteuse et n un nombre entier positif qui varie de zéro à l'infini. Si on désigne par $r_n$ le signal reçu à l'instant de signalisation nT, ses composantes en phase et en quadrature disponibles respectivement à la sortie des dispositifs d'échantillonnage 5 et 6 peuvent être désignées par $r_{i,n}$ et $r_{q,n}$ respectivement. Le démodulateur 11 fournit sur les lignes 12 et 13 les composantes en phase et en quadrature, respectivement $y_{i,n}$ et $y_{q,n}$, du signal reçu démodulé $y_n$, conformément aux relations connues:

$$y_{i,n}=r_{i,n} \cos \omega_c t + r_{q,n} \sin \omega_c t$$

$$y_{q,n}=-r_{i,n} \sin \omega_c t + r_{q,n} \cos \omega_c t$$

Les composantes en phase et en quadrature du signal reçu démodulé, disponibles sur les lignes 12 et 13, sont appliquées aux entrées d'un égaliseur transversal complexe adaptatif 14 dont on trouvera un exemple de réalisation dans le brevet français No. 73 26404 déposé par la demanderesse le 12 juillet 1973 et publié sous le No. 2 237 379.

Les composantes en phase et en quadrature du signal égalisé sont respectivement appliqués par des lignes 15 et 16 à l'entrée commune de deux commutateurs à deux positions 17 et 18. Les positions I des commutateurs 17 et 18 sont reliées aux entrées d'un système de détection de données 19 qui fournit respectivement sur des lignes 20 et 21 les composantes en phase et en quadrature des symboles de données détectés. Le système 19 fournit en outre sur des lignes 22 et 23 les composantes en phase et en quadrature d'un signal d'erreur représentatif de l'écart entre les composantes du signal égalisé et celles du symbole de données détecté correspondant. On trouvera un exemple de réalisation d'un système de détection de données dans le brevet français No. 74 43560 déposé par la demanderesse le 27 décembre 1974 et publié sous le No. 2 296 322. Les lignes 22 et 23 sont reliées respectivement à la position I de deux commutateurs à deux positions 24 et 25 dont les sorties communes sont reliées respectivement à l'égaliseur 14 par des lignes 26 et 27.

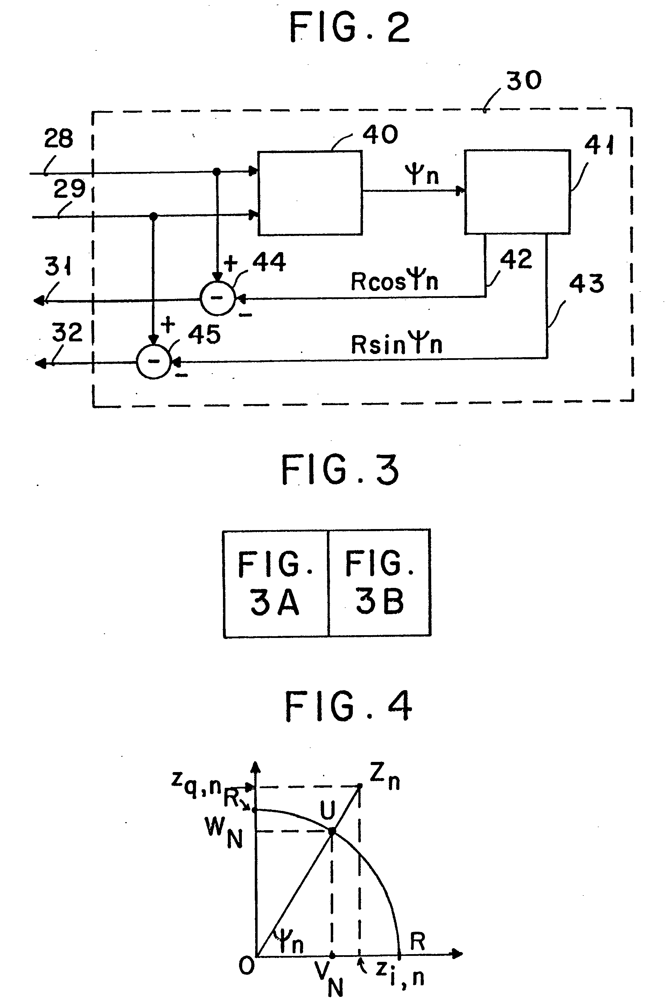

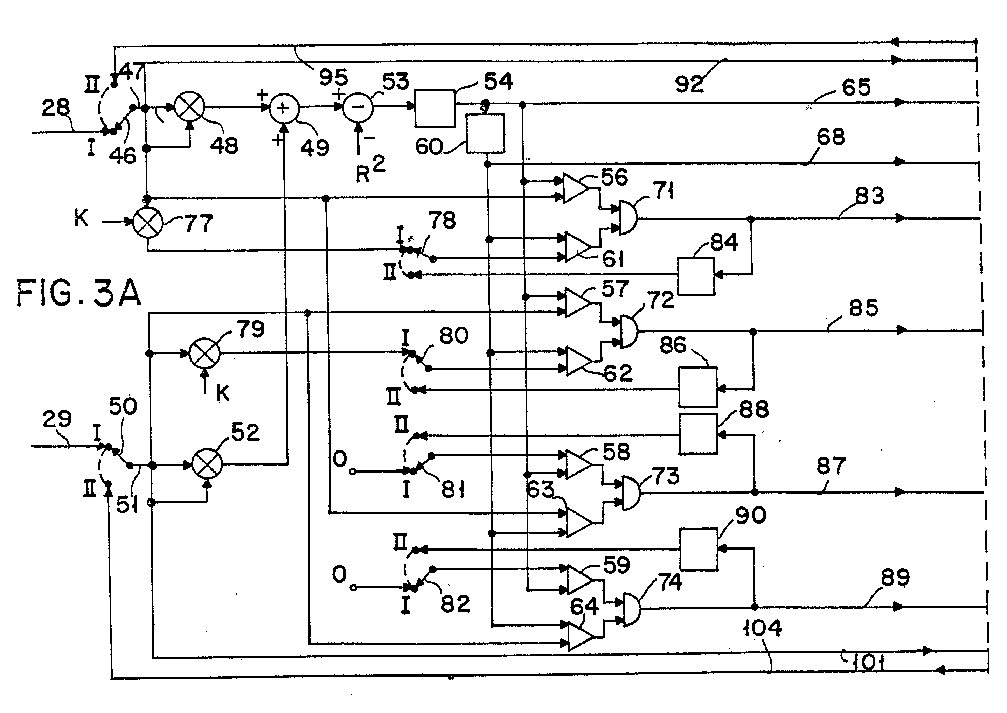

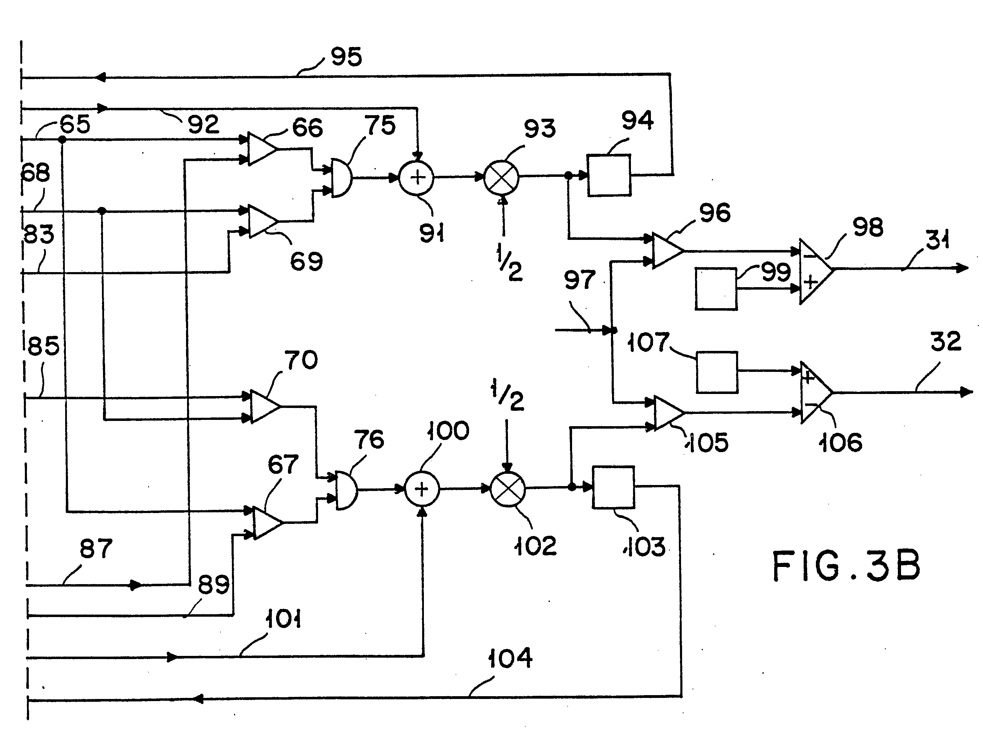

Les positions II des commutateurs 17 et 18 sont reliées respectivement par des lignes 28 et 29 aux entrées d'un générateur d'erreur 30. Le générateur d'erreur 30 est un générateur d'erreur conforme à l'invention et sera décrit en détail en référence aux figures 2 et 3. Il a deux sorties qui sont reliées respectivement par des lignes 31 et 32 aux positions II des commutateurs 24 et 25.

En fonctionnement en mode de données, les commutateurs 17, 18, 24 et 25 sont en position I. Le signal reçu dont les composantes en phase et en quadrature sont respectivement disponibles à la sortie des dispositifs d'échantillonnage 5 et 6 est démodulé dans le démodulateur 11, égalisé dans l'égaliseur 14, et les composantes en phase et en quadrature du signal égalisé sont appliquées au système de détection 19 à travers les commutateurs 17 et 18 en position I. A chaque instant de signalisation, le système de détection de données 19 fournit sur les lignes 20 et 21 les composantes du symbole détecté, et sur les lignes 22 et 23 les composantes du signal d'erreur. Les composantes de ce signal d'erreur sont appliquées à travers les commutateurs 24 et 25 en position I à l'égaliseur 14 qui en dérive des signaux de commande pour ajuster ses coefficients.

En fonctionnement en mode de données, les coefficients de l'égaliseur ont été au préalable ajustés correctement à des valeurs aussi proches que possible des valeurs optimales au cours d'une période d'initialisation, le système de détection de données 19 fait très peu d'erreurs de détection et le signal d'erreur qu'il fournit assure la convergence de l'égaliseur, c'est-à-dire un fonctionnement correct de l'égaliseur.

Lorsque les coefficients de l'égaliseur n'ont pas été ajustés correctement au préalable, soit que le récepteur n'ait pas profité de la période d'initialisation du réseau, soit que l'égalisation ait été perdue, comme vu plus haut, beaucoup d'erreurs de détection se produisent et le signal d'erreur fourni par le système de détection de données 19 n'assure plus la convergence de l'égaliseur. Il est alors nécessaire d'initialiser l'égaliseur.

Selon le procédé de l'invention, on initialise l'égaliseur en ajustant ses coefficients au moyen de signaux de commande dérivés non pas du signal d'erreur fourni par le système de détection de données mais du signal d'erreur fourni par le générateur d'erreur de l'invention. En se référant à la figure 1, en fonctionnement en mode d'initialisation, les commutateurs 17, 18, 24 et 25 sont en position II. Les composantes en phase et en quadrature du signal égalisé sont appliquées au générateur d'erreur 30 à travers les commutateurs 17 et 18 et les lignes 28 et 29, respectivement. Le générateur d'erreur 30 fournit un signal d'erreur dont les composantes en phase et en quadrature sont disponibles sur les lignes 31 et 32 d'où elles sont appliquées respectivement à travers les commutateurs 24 et 25 en position II à l'égaliseur 14 qui en dérive des signaux de commande pour ajuster ses coefficients.

5

## 0017716

Dans le récepteur de la figure 1, le signal reçu est démodulé avant d'être appliqué à l'égaliseur. L'homme de l'art comprendra que l'invention s'applique aussi bien aux récepteurs dans lesquels l'égaliseur reçu comme signal d'entrée du signal d'entrée non démodulé.

Avant de décrire en détail le générateur d'erreur 30, on décrira maintenant le procédé de l'invention.

Les coefficients des égaliseurs sont généralement ajustès de façon à minimiser l'erreur quadratique moyenne notée $\varepsilon^2$ et qui peut s'exprimer sous la forme connue:

$$\varepsilon^2 = E \mid z_n - a_n \mid^2 \qquad (1)$$

où

E indique l'espérance mathématique,

∥ indique le module

$z_n$ est le signal de sortie de l'égaliseur à l'instant de signalisation nT, et

$a_n$ est le symbole de données transmis à l'instant de signalisation nT.

Le procédé d'ajustement des coefficients de l'égaliseur le plus largement utilisé pour minimiser l'erreur quadratique moyenne est le procédé dit procédé du gradient. Le procédé du gradient est un procédé d'ajustement itératif défini par la relation connue:

$$C^{n+1} = C^n - \lambda y_n^*(z_n - a_n) \qquad (2)$$

où

$C^{n+1}$ est le vecteur des valeurs des coefficients à la $(n+)^{ième}$ itération, qui en général coïncide avec le $(n+1)^{ième}$ instant de signalisation,

$C^n$ est le vecteur des valeurs des coefficients à la $n^{ième}$ itération qui coïncide en général avec le $n^{ième}$ instant de signalisation,

$\lambda$ est une constante positive,

$y_n$ est le vecteur des signaux d'entrée stockés dans l'égaliseur à l'instant de signalisation nT, et

$*$ indique la quantité complexe conjuguée.

On notera que les relations (1) et (2) dépendent du symbole transmis $a_n$. Or, au récepteur, on ne dispose pas de symbole transmis $a_n$ mais d'une valeur estimée $\tilde{a}_n$ de ce symbole, fournie par le système de détection de données. La relation réellement utilisée par le récepteur pour ajuster les coefficients de l'égaliseur est la relation suivante dérivée directement de la relation (2)

$$C^{n+1} = C^n - \lambda y_n^*(z_n - \tilde{a}_n) \qquad (3)$$

En fonctionnement en mode de données, l'estimé $\tilde{a}_n$ est égal au symbole $a_n$ avec une très grande probabilité, la relation (3) est identique à la relation (2) et permet l'ajustement des coefficients de l'égaliseur. Lorsque l'égaliseur nécessite une initialisation, c'est que le récepteur fonctionne dans de mauvaises conditions, le système de détection de données fait beaucoup d'erreurs de détection et l'estimé $\tilde{a}_n$ est souvent différent du symbole $a_n$. La relation (3) n'est plus alors identique à la relation (2), et ne permet plus un ajustement correct des coefficients de l'égaliseur.

Selon l'invention, les coefficients de l'égaliseur sont ajustés de façon à minimiser la quantité $D^{(p)}$ qu'on désignera par le terme "dispersion d'ordre p", et qui est définie par la relation

$$D^{(p)} = E( \mid z_n \mid^p - R)^2 \qquad (4)$$

où

p est un nombre entier positif, et

R est une constante réelle positive dont on discutera le choix de sa valeur plus loin.

Pour minimiser la dispersion d'ordre (p), on ajustera les coefficients de l'égaliseur par la méthode itérative définie par la relation suivante:

$$C^{l+1} = C^l - \beta[\frac{dD^{(p)}}{dC}]C = C^l \qquad (5)$$

où

$\beta$ est une constante positive,

$\dfrac{dD^{(p)}}{dC}$ indique la dérivée de la dispersion par rapport à $C$, et

l est un nombre entier positif qui indique le numéro de l'itération.

6

En utilisant la notation vectorielle complexe, le signal $z_n$ peut s'écrire sous la forme

$$z_n = y'_n C \qquad (6)$$

où

$y'_n$ indique le vecteur $y_n$ transposé.
La dérivée de la dispersion d'ordre p, s'exprime alors sous la forme

$$\frac{dD^{(p)}}{dC} = 2p \, E \, y^*_n z_n |z_n|^{p-2}(|z_n|^p - R) \qquad (7)$$

La relation (5) s'écrit alors:

$$C^{l+1} = C^l - \beta 2p E y^*_n z_n |z_n|^{p-2}(|z_n|^p - R) \qquad (8)$$

La relation (8) peut s'écrire:

$$C^{l+1} = C^l - \mu E y^*_n e_n \qquad (9)$$

en posant

$$\mu = 2p\beta$$

$$e_n = z_n |z_n|^{p-2}(|z_n|^p - R) \qquad (10)$$

La relation (8) montre que les coefficients sont ajustés de façon à tendre à annuler le produit de corrélation $E \, y^*_n e_n$, c'est-à-dire, la valeur moyenne du produit $y^*_n e_n$.
La relation (9) peut s'approximer par la relation d'itération stochastique

$$C^{n+1} = C^n - \mu y^*_n e_n \qquad (9')$$

On désignera la quantité $e_n$ définie ci-dessus par le terme signal d'erreur. Le procédé d'ajustement de l'invention peut donc être réalisé par les deux étapes principales suivantes:
. détermination du signal d'erreur $e_n$ défini par la relation (10), puis
. ajustement des coefficients selon la relation (9').
On décrira maintenant plus en détail le cas où on ajuste les coefficients de façon à minimiser la dispersion d'ordre 1.
D'après la relation (4), la dispersion d'ordre 1 s'écrit:

$$D^{(1)} = E(|z_n| - R)^2 \qquad (11)$$

Le signal d'erreur $e_n$ devient

$$e_n = z_n \left(1 - \frac{R}{|z_n|}\right) \qquad (12)$$

Puisque

$$z_n = |z_n| \exp j \, \psi_n \qquad (13)$$

avec

$$j = \sqrt{-1}, \text{ et}$$

$$\psi_n \text{ phase de } z_n$$

la relation (12) peut s'écrire:

$$e_n = z_n - R \exp j \, \psi_n \qquad (14)$$

Pour ajuster les coefficients de l'égaliseur de façon à minimiser la dispersion $D^{(1)}$, on déterminera tout d'abord le signal d'erreur $e_n$ défini par la relation (14) puis on ajustera les coefficients conformément à la relation (9').

**0017716**

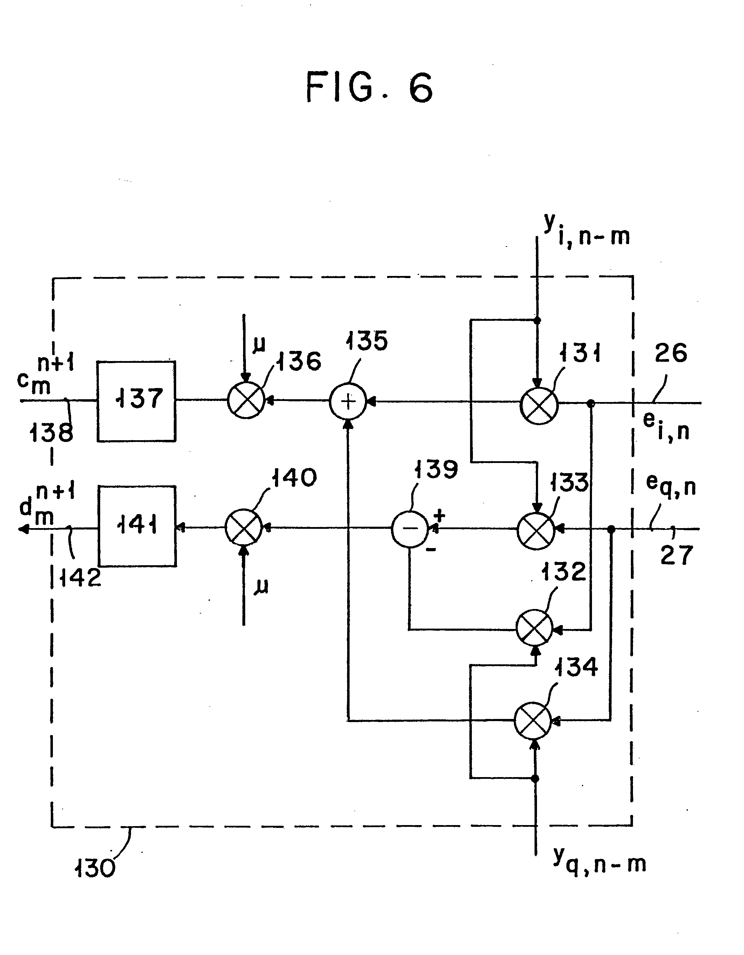

La détermination du signal d'erreur $e_n$ est réalisée par le générateur d'erreur 30 alors que l'ajustement des coefficients selon la relation (9') est réalisé par le dispositif d'ajustement de l'égaliseur qui sera décrit en référence à la figure 6.

On a représenté sur la figure 2 un premier mode de réalisation du générateur d'erreur 30 conforme à l'invention. Les composantes en phase et en quadrature du signal égalisé $z_n$, que l'on désignera respectivement par $z_{i,n}$ et $z_{q,n}$ sont appliquées par les lignes 28 et 29 (figure 1) aux entrées d'un détecteur de phase numérique 40. Le détecteur de phase 40 est un dispositif connu en soi qui reçoit comme entrées les composantes d'un signal et fournit à sa sortie la phase de ce signal. On trouvera une description détaillée d'un détecteur de phase numérique dans, par exemple, le brevet français No. 71 47850 publié sous le No. 2 164 544. Le détecteur de phase 40 fournit la valeur de phase $\psi_n$ qui est appliquée à une mémoire permanente 41. La mémoire permanente 41 contient une table de sinus et de cosinus et fournit en réponse à l'application de $\psi_n$ les valeurs de $R \cos \psi_n$ et $R \sin \psi_n$ sur des lignes 42 et 43 respectivement. Une telle utilisation d'une mémoire permanente est aujourd'hui très répandue et ne sera pas décrite plus en détail. Les quantités $R \cos \psi_n$ et $R \sin \psi_n$ sont appliquées respectivement à l'entrée (−) de deux soustracteurs binaires 44 et 45 dont les entrées (+) sont reliées respectivement aux lignes 28 et 29. Le soustracteur 44 fournit sur la ligne 31 (figure 1) la quantité $z_{i,n}-R \cos \psi_n$ que l'on désignera $e_{i,n}$

$$e_{i,n}=z_{i,n}-R \cos \psi_n \tag{15}$$

Le soustracteur 45 fournit sur la ligne 32 (figure 1) la quantité $z_{q,n}-R \sin \psi_n$ que l'on désignera $e_{q,n}$

$$e_{q,n}=z_{q,n}-R \sin \psi_n \tag{16}$$

Les quantités $e_{i,n}$ et $e_{q,n}$ sont les composantes en phase et en quadrature du signal d'erreur $e_n$ défini par la relation (14).

On a représenté sur la figure 3 constituée par les figures 3A et 3B un second mode de réalisation du générateur d'erreur 30 dans lequel le signal d'erreur est obtenu par dichotomie.

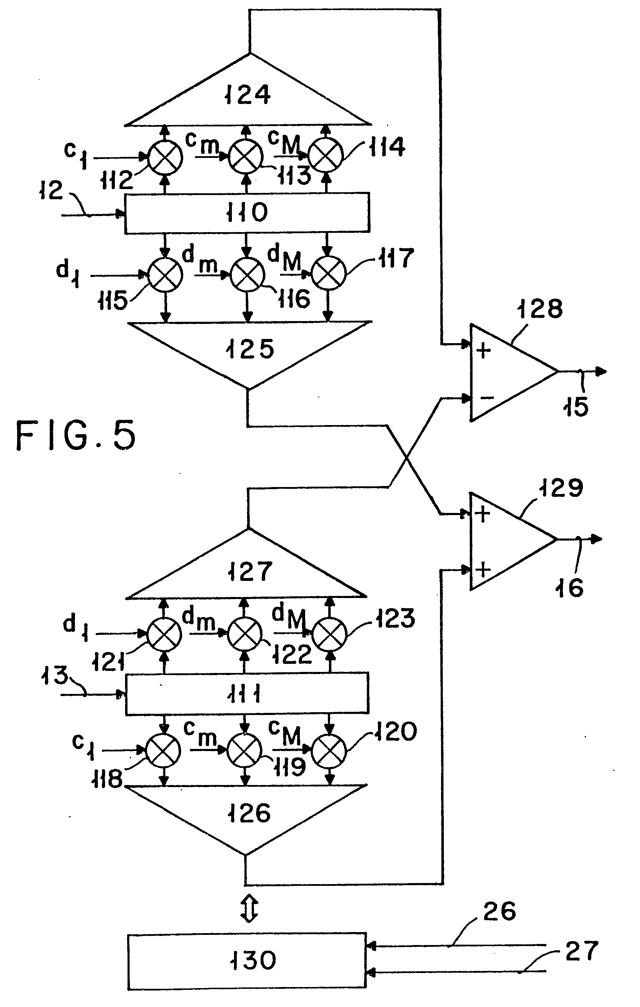

Avant de décrire le dispositif de la figure 3, on en expliquera le principe de fonctionnement en se référant au diagramme de la figure 4. Sur ce diagramme on a porté le point $Z_n$ représentatif du signal égalisé $z_n$ et de coordonnées cartésiennes $z_{i,n}$ et $z_{q,n}$. On a aussi tracé un cercle de rayon R (par commodité, seal un quart de cercle a été représenté). On désignera par U le point d'intersection du vecteur $\overrightarrow{OZ}_n$ et du cercle de rayon R, et par $V_N$ et $W_N$ les coordonnées cartésiennes de ce point. On comprendra que le vecteur $\overrightarrow{UZ}_n$ est représentatif du signal d'erreur $e_n$ défini par la gelation (14). On a

$$e_{i,n}=z_{i,n}-V_N \tag{17}$$

$$e_{q,n}=z_{q,n}-W_N$$

Les coordonnées du point U sont déterminées par dichotomie de la façon suivante:
Toute dichotomie commence par une étape d'initialisation suivie par plusieurs itérations.

Initialisation

On détermine deux points ayant la même phase que $Z_n$, l'un situé à l'intérieur du cercle et de coordonnées $V_{inf}(1)$, $W_{inf}(1)$ et l'autre situé à l'extérieur du cercle et de coordonnées $V_{sup}(1)$, $W_{sup}(1)$.

Pour cela on calcule la distance $\Delta_o$ du point $Z_n$ au cercle

$$\Delta_o=z_{i,n}^2+z_{q,n}^2-R^2 \tag{18}$$

si

$$\Delta_o<0$$

On choisit

$$V_{inf}(1)=z_{i,n}$$

$$W_{inf}(1)=z_{q,n} \tag{19}$$

$$V_{sup}(1)=K\,z_{i,n}$$

$$W_{sup}(1)=K\,z_{q,n}$$

où K est un facteur d'échelle qu'on a choisi égal à 16 dans l'exemple du récepteur illustré sur la figure 1.
Si $\Delta_o>0$

8

**0 017 716**

On choisit

$$V_{inf}(1)=0$$

$$W_{inf}(1)=0$$

$$V_{sup}(1)=z_{i,n} \qquad (20)$$

$$W_{sup}(1)=z_{q,n}$$

On fait ensuite la première itération
Si $\Delta_o>0$

$$V_1=(z_{i,n}+V_{inf}(1))/2$$

$$W_1=(z_{q,n}+W_{inf}(1))/2 \qquad (21)$$

Si $\Delta_o<0$

$$V_1=(z_{i,n}+V_{sup}(1))/2$$

$$W_1=(z_{q,n}+W_{sup}(1))/2 \qquad (22)$$

Itérations

Passage de $(V_n, W_n)$ et $(V_{inf}(n), W_{inf}(n), V_{sup}(n)$ et $W_{sup}(n))$
à $(V_{n+1}, W_{n+1})$ et $(V_{inf}(n+1), W_{inf}(n+1), V_{sup}(n+1)$ et $W_{sup}(n+1))$

On calcule

$$\Delta_n=V_n^2+W_n^2-R^2 \qquad (23)$$

Si $\Delta_n>0$

On choisit

$$V_{inf}(n+1)=V_{inf}(n)$$

$$W_{inf}(n+1)=W_{inf}(n) \qquad (24)$$

$$V_{sup}(n+1)=V_n$$

$$W_{sup}(n+1)=W_n$$

Si $\Delta_n<0$

On choisit

$$V_{inf}(n+1)=V_n \qquad (25)$$

$$W_{inf}(n+1)=W_n$$

$$V_{sup}(n+1)=V_{sup}(n)$$

$$W_{sup}(n+1)=W_{sup}(n)$$

et on effectue l'itération
Si $\Delta_n>0$

$$V_{n+1}=(V_n+V_{inf}(n+1))/2 \qquad (26)$$

$$W_{n+1}=(W_n+W_{inf}(n+1))/2$$

Si $\Delta_n<0$

$$V_{n+1}=(V_n+V_{sup}(n+1))/2 \qquad (27)$$

$$W_{n+1}=(W_n+W_{sup}(n+1))/2$$

9

# 0017716

Après N itérations, on obtient les coordonnées $V_N$, $W_N$ du point U avec une très bonne approximation. En pratique la dichotomie converge très bien après six ou sept itérations.

Une fois les coordonnées $V_N$ et $W_N$ déterminées par dichotomie, les composantes du signal d'erreur sont obtenues conformément aux relations (17).

On notera que la cadence des itérations ne dépend que de la vitesse de fonctionnement des divers composants utilisés.

En se référant à la figure 3, la composante $z_{i,n}$ disponible sur la ligne 28 est appliquée à la position I d'un commutateur 46 dont la sortie est appliquée par la ligne 47 aux deux entrées d'un multiplicateur 48 dont la sortie est reliée à une entrée d'un additionneur 49. Le composante $z_{q,n}$ disponible sur la ligne 29 est appliquée à la position I d'un commutateur 50 dont la sortie est appliquée par la ligne 51 aux deux entrées d'un multiplicateur 52 dont la sortie est reliée à l'autre entrée de l'additionneur 49. La sortie de l'additionneur 49 est appliquée à l'entrée (+) d'un soustracteur 53 dont l'entrée (—) reçoit la quantité $R^2$. La sortie du soustracteur 53 est appliquée à un dispositif de détermination de signe 54. La sortie du dispositif 54 est reliée à une entrée de chacune de quatre portes ET 56, 57, 58 et 59. La sortie du dispositif 54 est reliée en outre à travers un inverseur 60 à une entrée de chacune de quatre portes ET 61, 62, 63 et 64. La sortie du dispositif 54 est aussi reliée par une ligne 65 à une entrée de chacune de deux portes ET 66 et 67. La sortie de l'inverseur 60 est reliée par une ligne 68 à une entrée de chacune de deux portes ET 69 et 70. Les sorties des portes ET 56 et 61 sont appliquées aux entrées d'une porte OU 71. Les sorties des portes ET 57 et 62 sont appliquées aux entrées d'une porte OU 72. Les sorties des portes ET 58 et 63 sont appliquées aux entrées d'une porte OU 73. Les sorties des portes ET 59 et 64 sont appliquées aux entrées d'une porte OU 74. Les sorties des portes ET 66 et 69 sont appliquées aux entrées d'une porte OU 75 et les sorties des portes ET 67 et 70 sont appliquées aux entrées d'une porte OU 76. La ligne 47 est en outre reliée à l'autre entrée des portes ET 56 et 63, et à une entrée d'un multiplicateur 77 qui reçoit sur son autre entrée la quantité K. La sortie du multiplicateur 77 est reliée à la position I d'un commutateur 78 dont la sortie est reliée à l'autre entrée de la porte 61. La ligne 51 est reliée à l'autre entrée des portes ET 57 et 64 et à une entrée d'un multiplicateur 79 qui reçoit sur son autre entrée la quantité K. La sortie du multiplicateur 79 est reliée à la position I d'un commutateur 80 dont la sortie est reliée à l'autre entrée de la porte ET 62. L'autre entrée de la porte ET 58 est reliée à la sortie d'un commutateur 81 dont la position I reçoit la quantité 0. L'autre entrée de la porte ET 59 est reliée à la sortie d'un commutateur 82 dont la position I reçoit la quantité 0. La sortie de la porte OU 71 est reliée par une ligne 83 à l'autre entrée de la porte ET 69 et à l'entrée d'un élément de retard 84 dont la sortie est reliée à la position II du commutateur 78. La sortie de la porte OU 72 est reliée par une ligne 85 à l'autre entrée de la porte ET 70 et à l'entrée d'un élément de retard 86 dont la sortie est reliée à la position II du commutateur 80. La sortie de la porte OU 73 est reliée par une ligne 87 à l'autre entrée de la porte ET 66 et à l'entrée d'un élément de retard 88 dont la sortie est reliée à la position II du commutateur 81. La sortie de la porte OU 74 est reliée par une ligne 89 à l'autre entrée de la porte ET 67 et à l'entrée d'un élément de retard 90 dont la sortie est reliée à la position II du commutateur 82. La sortie de la porte OU 75 est reliée à une entrée d'un additionneur 91 dont l'autre entrée est reliée à la ligne 47 par une ligne 92. La sortie de l'additionneur 91 est multipliée par la quantité 1/2 dans un multiplicateur 93. La sortie du multiplicateur 93 est reliée à l'entrée d'un élément de retard 94 dont la sortie est reliée par une ligne 95 à la position II du commutateur 46. La sortie du multiplicateur 93 est en outre reliée à une entrée d'une porte ET 96 dont l'autre entrée reçoit un signal de transfert par une ligne 97. La sortie de la porte ET 96 est reliée à l'entrée (—) d'un soustracteur 98 dont la sortie est reliée à la ligne 31 (figure 1). L'entrée (+) du soustracteur 98 est reliée à la sortie d'un registre 99 dont l'entrée est reliée à la ligne 28 par une ligne non représentée. La sortie de la porte OU 76 est reliée à une entrée d'un additionneur 100 dont l'autre entrée est reliée à la ligne 51 par une ligne 101. La sortie de l'additionneur 100 est multipliée par la quantité 1/2 dans un multiplicateur 102. La sortie du multiplicateur 102 est reliée à l'entrée d'un élément de retard 103 dont la sortie est reliée par une ligne 104 à la position II du commutateur 50. La sortie du multiplicateur 102 est en outre reliée à une entrée d'une porte ET 105 dont l'autre entrée reçoit le signal de transfert par la ligne 97. La sortie de la porte ET 105 est reliée à l'entrée (—) d'un soustracteur 106 dont la sortie est reliée à la ligne 32 (figure 1). L'entrée (+) du soustracteur 106 est reliée à la sortie d'un registre 107 dont l'entrée est reliée à la ligne 29 par une ligne non représentée. Les éléments de retard 84, 86, 88, 90, 94 et 103 introduisent un retard égal à l'intervalle de temps qui sépare deux itérations successives.

On décrira maintenant le fonctionnement du dispositif de la figure 3. Pendant l'initialisation de la dichotomie, les commutateurs 46, 50, 78, 80, 81 et 82 sont en position I. La composant $z_{i,n}$ disponible sur la ligne 28 est appliquée au multiplicateur 48 qui fournit à sa sortie la quantité $z_{i,n}^2$. Simultanément la composante $z_{q,n}$ disponible sur la ligne 29 est appliquée au multiplicateur 52 qui fournit à sa sortie la quantité $z_{q,n}^2$. On obtient à la sortie du soustracteur 53 la distance $\Delta_o$ définie par la relation (18). Les composantes $z_{i,n}$ et $z_{q,n}$ sont aussi respectivement stockées dans les registres 99 et 107.

Si la distance $\Delta_o$ est négative, un niveau bas apparaît à la sortie du dispositif 54 et rend non conductrices les portes ET 56, 57, 58, 59, 66 et 67, et un niveau haut apparaît à la sortie de l'inverseur 60 et rend conductrices les portes ET 61, 62, 63, 64, 69 et 70.

La composante $z_{i,n}$ est multipliée par K dans le multiplicateur 77 et la quantité K $z_{i,n}$ qui d'après la relation (19) est égale à $V_{sup}$ (1) est appliquée à l'entrée de l'additionneur 91 à travers les portes 61, 71, 69 et 75.

La composante $z_{i,n}$ est ajoutée à $V_{sup}$ (1) dans l'additionneur 91 et on obtient à la sortie du multiplicateur 93 la coordonnée $V_1$ conformément aux relations (22). La coordonnée $V_1$ est stockée dans l'élément de retard 94. De même on obtient à la sortie du multiplicateur 102 la coordonnée $W_1$ conformément aux relations (22). La coordonnée $W_1$ est stockée dans l'élément 103. Les coordonnées $V_{inf}$ (1), $W_{inf}$ (1), $V_{sup}$ (1) et $W_{sup}$ (1) définies pour les relations (19) sont stockées dans les éléments 88, 90, 84 et 86 respectivement.

On vérifiera que dans le cas où la distance $\Delta_o$ est positive on obtient bien les coordonnées $V_1$ et $W_1$ définies par les relations (21) à la sortie des multiplicateurs 93 et 102. A la fin de l'initialisation de la dichotomie, les commutateurs 46, 50, 78, 80, 81 et 82 sont en position II et les itérations successives prennent place. On décrira l'itération qui fait passer des valeurs $V_n$ et $W_n$ aux valeurs $V_{n+1}$ et $W_{n+1}$, respectivement. Au début de cette itération les valeurs $V_n$, $W_n$, $V_{inf}$ (n), $W_{inf}$ (n), $V_{sup}$ (n) et $W_{sup}$ (n) sont disponibles respectivement à la sortie des éléments 94, 103, 88, 90, 84 et 86.

La coordonnée $V_n$ est appliquée au multiplicateur 48 par la ligne 95 et le commutateur 46 en position II, et la coordonnée $W_n$ est appliquée au multiplicateur 52 par la ligne 104 et le commutateur 50 en position II. On obtient la valeur de la distance $\Delta_n$ définie par la relation (23) à la sortie du soustracteur 53.

Si la distance $\Delta_n$ est négative, les coordonnées $V_{sup}$ (n) disponibles à la sortie de l'élément 84, et qui d'après les relations (25) est égale à $V_{sup}$ (n+1), est appliquée à l'entrée de l'additionneur 91 à travers le commutateur 78 en position II, et les portes 61, 71, 69 et 75. La coordonnée $V_{sup}$ (n+1) est ajoutée à la coordonnée $V_N$ qui est disponible à la sortie de l'élément 94 et qui est appliquée à l'additionneur 91 par la ligne 95, le commutateur 46 en position II et la ligne 92. On obtient à la sortie du multiplicateur 93 la coordonnée $V_{n+1}$ conformément aux relations (27). On obtient de même à la sortie du multiplicateur 102 la coordonnée $W_{n+1}$ conformément aux relations (27). On vérifiera que dans le cas où la distance $\Delta_n$ est positive on obtient bien les coordonnées $V_{n+1}$ et $W_{n+1}$ définies par les relations (26) à la sortie des multiplicateurs 93 et 102.

Au bout de N itérations les coordonnées $V_N$ et $W_N$ sont disponibles à la sortie des multiplicateurs 93 et 102, et un signal de transfert est appliqué sur la ligne 97 et rend conductrices les portes ET 96 et 105. La coordonnée $V_N$ disponible ainsi à la sortie de la porte ET 96 est retranchée de la valeur de $z_{i,n}$ lue du registre 99 dans le soustracteur 98 et on obtient sur la ligne 31 la composante $e_{i,n}$ du signal d'erreur. On obtient de même à la sortie du soustracteur 106, sur la ligne 31, la composante $e_{q,n}$ du signal d'erreur.

Les composantes $e_{i,n}$ et $e_{q,n}$ du signal d'erreur sont appliquées à l'égaliseur 14, par les lignes 31 et 32, les commutateurs 24 et 25 en position II et les lignes 26 et 27.

L'égaliseur 14 est un égaliseur complexe adaptatif dont on trouvera une description détaillée dans le brevet français No. 73 26404 déposé par la demanderesse le 12 juillet 1973 et publié sous le No. 2 237 379, et qu'on a représenté schématiquement sur la figure 5.

Le signal égalisé $z_n$ obtenu à la sortie de l'égaliseur à l'instant de signalisation nT s'exprime de façon connue par

$$z_n = \sum_{m=1}^{M} y_{n-m} C_m \qquad (28)$$

où

M représente le nombre de prises de l'égaliseur,
$C_m$ les coefficients de l'égaliseur, et
$y_{n-m}$ le signal reçu démodulé présent sur la $m^{ième}$ prise.
Dans le cas d'un récepteur DSB—QC les quantités $z_n$, $y_{n-m}$ et $C_m$ sont des quantitiés complexes

$$z_n = z_{i,n} + j z_{q,n}$$

$$y_{n-m} = y_{i,n-m} + j y_{q,n-m}$$

$$C_m = c_m + j d_m$$

et la relation (28) peut s'écrire:

$$z_{i,n} = \sum_{m=1}^{M} y_{i,n-m} c_m - \sum_{m=1}^{M} y_{q,n-m} d_m \qquad (29)$$

$$z_{q,n} = \sum_{m=1}^{M} y_{i,n-m} d_m + \sum_{m=1}^{M} y_{q,n-m} c_m \qquad (30)$$

**0017716**

L'égaliseur 14 illustré sur la figure 5 met en oeuvre les relations (29) et (30). Il comprend deux lignes à retard à M prises 110 et 111 dans lesquelles sont emmagasinées respectivement les composantes en phase et en quadrature du signal reçu démodulé. Le retard entre deux prises adjacentes est égal à la période de signalisation T. Les prises de la ligne à retard 110 sont reliées respectivement à une première entrée de M multiplicateurs 112, ..., 113, ..., 114 et à une première entrée de M multiplicateurs 115, ..., 116, ..., 117. Les secondes entrées des multiplicateurs 112, ..., 113, ..., 114 reçoivent respectivement les valeurs, $c_1$, ..., $c_m$, ..., $c_M$ alors que les secondes entrées des multiplicateurs 115, ..., 116, ..., 117 reçoivent respectivement les valeurs $d_1$, ..., $d_m$, ..., $d_M$. Les prises de la ligne à retard 111 sont reliées respectivement à une première entrée de M multiplicateurs 118, ..., 119, ..., 120, et à une première entrée de M multiplicateurs 121, ..., 122, ..., 123. Les secondes entrées des multiplicateurs 118, ..., 119, ..., 120 reçoivent respectivement les valeurs $c_1$, ..., $c_m$, ..., $c_M$, alors que les secondes entrées des multiplicateurs 121, ..., 122, ..., 123 reçoivent respectivement les valeurs $d_1$, ..., $d_m$, ..., $d_M$. Les sorties des multiplicateurs 112, ..., 114 sont sommées dans un sommateur 124. Les sorties des multiplicateurs 115, ..., 117 sont sommées dans un sommateur 125. Les sorties des multiplicateurs 118, ..., 120, sont sommées dans un sommateur 126. Les sorties des multiplicateurs 121, ..., 123 sont sommées dans un sommateur 127. La sortie du sommateur 127 est retranchée de celle du sommateur 124 dans un soustracteur 128 dont la sortie est reliée à la ligne 15. Les sorties des sommateurs 125 et 126 sont additionnées dans un additionneur 129 dont la sortie est reliée à la ligne 16. On vérifiera qu'on obtient respectivement sur les lignes 15 et 16 les composantes $z_{i,n}$ et $z_{q,n}$ conformément aux relations (29) et (30). Les coefficients de l'égaliseur sont ajustés par un dispositif d'ajustement des coefficients 130 qui reçoit les composantes du signal d'erreur par les lignes 26 et 27, respectivement, et qu'on décrira brièvement en se référant à la figure 6.

Les coefficients de l'égaliseur sont ajustés selon le procédé défini par la relation (9') rappelée ci-dessous:

$$C^{n+1}=C^n-\mu Y_n^* e_n \qquad (9')$$

où

$C^{n+1}$ représente le vecteur des valeurs des coefficients $C_o$, ..., $C_m$, ..., $C_M$ de l'égaliseur à la $(n+1)^{ième}$ itération.

$C^n$ représente le vecteur des valeurs de $C_o$, ..., $C_M$ à la $n^{ième}$ itération.

$e_n$ est le signal d'erreur de composantes $e_{i,n}$ et $e_{q,n}$ et

$Y_n$ est le vecteur des signaux emmagasinés dans l'égaliseur à l'instant de signalisation nT, c'est-à-dire le vecteur des signaux $y_n, y_{n-l}, ..., y_{n-m}, ..., y_{n-M}$.

Les coefficients $C_m$ sont des coefficients complexes

$$C_m=c_m+jd_m \qquad (31)$$

Le signal d'erreur $e_n$ peut s'écrire:

$$e_n=e_{i,n}+j\, e_{q,n} \qquad (32)$$

Le signal $y_n$ est un signal complexe

$$Y_n=y_{i,n}+j\, y_{q,n} \qquad (33)$$

En considérant les relations (31), (32) et (33) on peut obtenir à partir de la relation (9').

$$c_m^{n+1}=c_m^n-\mu(e_{i,n}\, y_{i,n-m}+e_{q,n}\, y_{q,n-m}) \qquad (34)$$

$$d_m^{n+1}=d_m^n-\mu(e_{q,n}\, y_{i,n-m}-e_{i,n}\, y_{q,n-m}) \qquad (35)$$

pour $n=1, 2, ..., M$.

Le dispositif d'ajustement des coefficients 130 met en oeuvre les relations (34) et (35). Dans un souci de simplification on n'a illustré sur la figure 6 que les circuits associés à l'ajustement des coefficients $c_m$ et $d_m$.

La composante $e_{i,n}$ fournie par le générateur d'erreur 30 est appliquée par la ligne 26 à une première entrée de deux multiplicateurs 131 et 132. La seconde entrée du multiplicateur 131 reçoit la composante $y_{i,n-m}$ de la $m^{ième}$ prise de la ligne à retard 110. On obtient à la sortie du multiplicateur 131 le produit $e_{i,n}\, y_{i,n-m}$. La composante $e_{q,n}$ fournie par le générateur 30 est appliquée par la ligne 27 à une première entrée de deux multiplicateurs 133 et 134. La seconde entrée du multiplicateur 134 reçoit la composante $y_{q,n-m}$ de la $m^{ième}$ prise de la ligne à retard 111. On obtient à la sortie du multiplicateur 134 le produit $e_{q,n}\, y_{q,n-m}$ qui est ajouté au produit $e_{i,n}\, y_{i,n-m}$ fourni par le multiplicateur 131 dans un additionneur 135. La sortie de l'additionneur 135 est multipliée par la quantité $\mu$ dans un multiplicateur 136 qui fournit le signal de commande

$$\mu(e_{i,n}\, y_{i,n-m}+e_{q,n}\, y_{q,n-m})$$

qui est retranché de la valeur $c_m^n$ de $c_m$ stockée dans un accumulateur 137. L'accumulateur 137 contient alors la nouvelle valeur $c_m^{n+1}$ de $c_m$ qui est appliquée aux multiplicateurs 113 et 119 par la ligne 138.

La seconde entrée du multiplicateur 133 reçoit la composante $y_{i,n-m}$, alors que la seconde entrée du multiplicateur 132 reçoit la composante $y_{q,n-m}$. La sortie du multiplicateur 132 est retranchée de la sortie du multiplicateur 133 dans un soustracteur 139 dont la sortie est multipliée par la quantité $\mu$ dans un multiplicateur 140. On obtient à la sortie du multiplicateur 140 le signal de commande:

$$\mu(e_{q,n}\, y_{i,n-m}-e_{i,n}\, y_{q,n-m})$$

qui est retranché de la valeur $d_m^n$ de $d_m$ stockée dans un accumulateur 141. L'accumulateur 141 contient alors la nouvelle valeur $d_m^{n+1}$ de $d_m$, qui est appliquée par la ligne 142 aux multiplicateurs 116 et 122.

Jusqu'ici on a décrit en détail le procédé de l'invention dans le cas où les coefficients de l'égaliseur sont ajustés de façon à minimiser la dispersion d'ordre 1, $D^{(1)}$.

D'après la relation (4), la dispersion d'ordre 2 s'écrit:

$$D^{(2)}=E(\,|\,z_n\,|^2-R)^2 \qquad (36)$$

Le signal d'erreur $e_n$ s'exprime par la relation

$$e_n=z_n(\,|\,z_n\,|^2-R) \qquad (37)$$

Le procédé d'ajustement des coefficients de l'égaliseur comprend encore deux étapes principales qui sont:

. détermination du signal d'erreur $e_n$, et
. ajustement des coefficients selon la relation (9').

Seule l'étape de détermination du signal d'erreur diffère de celle décrite précédemment mais l'homme de l'art pourra facilement mettre en oeuvre la relation (37) en utilisant les enseignements de la description qui précède. Le signal d'erreur défini par la relation (37) est plus facile à déterminer que ne l'est le signal d'erreur défini par la relation (14) mais ne permet pas un ajustement aussi rapide des coefficients. La minimisation de la dispersion d'ordre 3 conduit à la détermination d'un signal d'erreur plus complexe. L'homme de l'art comprendra que le choix de l'ordre de la dispersion se fera en pratique par un compromis entre la rapidité de l'ajustement et la complexité du générateur d'erreur nécessaire pour déterminer le signal d'erreur.

On discutera maintenant la valeur de R. Il est clair que changer R en $\alpha$R, où $\alpha$ est un nombre positif, résultera en régime permanent à changer $C$ en $\alpha^p C$. La valeur de R ne commande ainsi uniquement que l'amplification de l'égaliseur. Si la constellation transmise est connue on peut déterminer facilement la valeur de R qui donnera l'amplification idéale de l'égaliseur. Par exemple, dans le cas de la dispersion d'ordre 1, en remplaçant $z_n$ par $a_n$ dans la relation (6), on peut montrer qu'on obtient:

$$R=\frac{E\,|\,a_n\,|^2}{E\,|\,a_n\,|}$$

Pour la constellation définie par l'avis V29 du CCITT, on obtient R=3,95, alors que pour la constellation rectangulaire à 16 états on obtient R=3,34.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Procédé pour initialiser l'égaliseur complexe adaptatif à plusieurs coefficients d'un récepteur de données dans un système de transmission de données synchrone dans lequel les symboles de données sont transmis à la cadence de signalisation 1/T en utilisant une modulation à double bande latérale-porteuses en quadrature, caractérisé en ce qu'il consiste à ajuster les coefficients de l'égaliseur de façon à minimiser la quantité

**0017716**

$$D^{(p)}=E(|z_n|^p-R)^2$$

où

E indique l'espérance mathématique,

$z_n$ est le signal égalisé à l'instant de signalisation nT,

R est une constante réelle positive, et

p est un nombre entier positif.

2. Procédé selon la revendication 1 caractérisé en ce qu'il comprend les étapes suivantes:

appliquer le signal reçu du canal de transmission à l'égaliseur,

engendrer un signal d'erreur à partir du signal égalisé, le signal d'erreur $e_n$ engendré à l'instant de signalisation nT, n variant de zéro à l'infini étant défini par la relation

$$e_n=z_n|z_n|^{p-2}(|z_n|^p-R)$$

ajuster les coefficients de l'égaliseur de façon à tendre à annuler le produit de corrélation

$$E\,y_n^*\,e_n$$

où

$y_n$ est le vecteur des signaux stockés dans l'égaliseur à l'instant nT, et

* indique la quantité complexe conjuguée.

3. Procédé selon la revendication 1, caractérisé en ce que p=1.

4. Procédé selon la revendication 2 caractérisé en ce que p=1 et en ce que le signal $e_n$ est défini par la relation

$$e_n=z_n-R\exp j\,\psi_n$$

où

$\psi_n$ est la phase du signal égalisé $z_n$.

5. Procédé selon la revendication 4, caractérisé en ce que le signal d'erreur $e_n$ est obtenu en déterminant la distance qui sépare un premier point ayant pour coordonnées dans un système d'axes rectangulaires les composantes en phase et en quadrature du signal égalisé et un second point ayant la même phase que ledit premier point et étant situé sur un cercle de rayon R.

6. Procédé selon la revendication 1, caractérisé en ce que p=2 et en ce que le signal d'erreur $e_n$ est défini par la relation

$$e_n=z_n(|z_n|^2-R).$$

7. Procédé selon l'une quelconque des revendications précédentes caractérisé en ce que les coefficients de l'égaliseur sont ajustés conformément à la relation

$$C^{n+1}=C^n-\mu y_n^*\,e_n$$

où

$C^n$ et $C^{n+1}$ représentent respectivement les vecteurs des valeurs des coefficients de l'égaliseur à la $n^{ième}$ et à la $(n+1)^{ième}$ itérations, et

$\mu$ est une constante positive.

**Patentansprüche**

1. Verfahren für die Initialiserung eines komplexen, sich mehreren Koeffizienten eines Datenempfangsgeräts anpassenden Entzerrers in einem System synchroner Datenübertragung, in dem die Datensymbole mit der Signalisierungskadenz 1/T übertragen werden, unter Verwendung einer Zweiseitenband-Quadraturträgermodulation, dadurch gekennzeichnet, daß die Koeffizienten des Entzerrers so abgeglichen werden, daß die Größe

$$D^{(p)}=E(|z_n|^p-R)^2$$

minimiert wird.

In dieser Formel bedeuten:

E=die mathematische Erwartung

$z_n$=das zum Zeitpunkt der Signalisierung nT ausgeglichene Signal

R ist eine reelle positive Zahl

p ist eine ganze positive Zahl.

14

**0 017 716**

2. Verfahren nach Anspruch 1, dadurch gekennzeichnet, daß es außerdem folgende Schritte enthält:

— Zuführung des vom Übertragungskanal empfangenen Signals an die Ausgleichsvorrichtung,
— Erzeugung eines Fehlersignals aus dem entzerrten Signal, wobei das Fehlersignal $e_n$, erzeugt zum Zeitpunkt der Signalisierung nT, mit n veränderlich von Null bis unendlich, definiert ist durch die Beziehung:

$$e_n = z_n |z_n|^{p-2}(|z_n|^p - R)$$

— Anpassung der Koeffizienten der Ausgleichsvorrichtung mit dem Ziel, das Korrelationsprodukt

$$E^* y_n e_n$$

zu Null zu machen. In dieser Formel ist
$y_n$ der Vektor der im Entzerrer zum Zeitpunkt nT gespeicherten Signale, und
* die konjugierte komplexe Größe.
3. Verfahren nach Anspruch 1, dadurch gekennzeichnet, daß p=1.
4. Verfahren nach Anspruch 2, dadurch gekennzeichnet, daß p=1 und daß das Signal $e_n$ durch folgende Beziehung definiert ist:

$$e_n = z_n - R \exp j \psi_n,$$

worin $\psi_n$ die Phase des entzerrten Signals $z_n$ ist.
5. Verfahren nach Anspruch 4, dadurch gekennzeichnet, daß das Fehlersignal $e_n$ ermittelt wird, indem der Abstand bestimmt wird, der in einem System rechtwinkliger Achsen einen ersten Punkt mit den Koordinaten der Komponenten des entzerrten Signals in Phase und in Quadratur von einem zweiten Punkt mit der gleichen Phase wie der genannte erste Punkt und der sich auf einem Kreis mit Radius R befindet, trennt.
6. Verfahren nach Anspruch 1, dadurch gekennzeichnet, daß p=2 und daß das Fehlersignal $e_n$ durch die Beziehung

$$e_n = z_n(|z_n|^2 - R)$$

definiert ist.
7. Verfahren nach einem der vorangehenden Ansprüche, dadurch gekennzeichnet, daß die Koeffizienten des Entzerrers nach der Beziehung

$$C^{n+1} = C^n - \mu y_n^* e_n$$

angepaßt werden.
In dieser Gleichung bedeuten $C^n$ und $C^{n+1}$ jeweils die Vektoren der Werte der Koeffizienten des Entzerrers in der n-ten und (n+1)-ten Iteration und sind eine positive Konstante.

**Claims**

1. A method for initializing the multi-coefficient complex adaptive equalizer of a data receiver in a synchronous data transmission system, in which the data symbols are transmitted at the signaling rate 1/T, using a double sideband-quadrature carrier modulation technique, characterized in that it consists in adjusting the coefficients of the equalizer so as to minimize the quantity:

$$D^{(p)} = E(|z_n|^p - R)^2$$

where
E is the mathematical expectation,
$z_n$ is the equalized signal at the signaling instant nT,
R is a positive real constant, and
p is a positive integer.
2. A method according to claim 1, characterized in that it includes the following steps of:
applying the signal received from the transmission channel to the equalizer,
generating of an error signal derived from the equalized signal, the error signal $e_n$ generated at the signaling instant nT, n varying from zero to infinity, being defined as:

$$e_n = z_n |z_n|^{p-2}(|z_n|^p - R)$$

adjusting the equalizer coefficients in such a way that the correlation product

15

$$\mathrm{E}\, y_n^*\, e_n$$

where
$y_n$ is the vector of the signals stored in the equalizer at the instant nT, and
* indicates the conjugate complex quantity
will tend to approach zero.

3. A method according to claim 1, characterized in that p=1.

4. A method according to claim 2, characterized in that p=1 and in that the signal $e_n$ is defined as:

$$e_n = z_n - R\, \exp j\, \psi_n$$

where
$\psi_n$ is the phase of the equalized signal $z_n$.

5. A method according to claim 4, characterized in that the error signal $e_n$ is obtained in determining the distance between a first point having the in-phase and quadrature components of the equalized signal, as coordinates in a rectangular coordinates system and a second point having the same phase as said first point and located on a circle of radius R.

6. A method according to claim 1, characterized in that p=2 and that the error signal $e_n$ is defined as:

$$e_n = z_n(\,|\, z_n\, |^2 - R).$$

7. A method according to any one of the preceding claims, characterized in that the coefficients of the equalizer are adjusted in accordance with the relation:

$$C^{n+1} = C^n - \mu\, y_n^*\, e_n$$

where
$C^n$ and $C^{n+1}$ represent the vectors of the values of the equalizer coefficients at the $nth$ and $(n+1)^{th}$ iterations, respectively, and
$\mu$ is a positive constant.

16

FIG.1

0017716

FIG. 2

FIG. 3

| FIG. 3A | FIG. 3B |
|---------|---------|

FIG. 4

2

FIG.3A

FIG.3B

FIG.5

# FIG. 6